# EUROPEAN PATENT APPLICATION

(11) **EP 3 813 411 A1**
(43) Date of publication of application: **28.04.2021**
(21) Application number: 19822190.5
(22) Date of filing: 29.05.2019
(51) Int. Cl.: H04W 24/04

(54) **TRANSMISSION CONTROL METHOD, DEVICE AND SYSTEM**

(30) Priority: 19.06.2018 CN 201810632088
(71) Applicant: Vivo Mobile Communication Co., Ltd., Dongguan, Guangdong 523860 (CN)
(72) Inventor: WU, Yumin, Dongguan, Guangdong 523860 (CN)
(74) Representative: Lavoix
(86) International application number: PCT/CN2019/089070
(87) International publication number: WO 2019/242476

(57) **Abstract**

A transmission control method, apparatus, and system are provided according to the embodiments, which relate to field of communications technologies and can solve a problem that transmission rate of UE is decreased due to reduced time domain resources available to the UE. Specific solution includes: receiving, by UE, interference cancellation configuration information sent by a base station, where interference cancellation configuration information is used to instruct the UE to stop performing data transmission on first time domain resource by using first frequency domain resource, and the first time domain resource is time domain resource that is interfered when the UE performs data transmission on the first frequency domain resource; and stopping, by the UE, based on interference cancellation configuration information, performing data transmission on the first time domain resource by using the first frequency domain resource. The embodiments are applied to a scenario of interference cancellation.

## Description

This application claims priority to Chinese Patent Application No. 201810632088.7, filed with the China National Intellectual Property Administration on June 19, 2018, and entitled "TRANSMISSION CONTROL METHOD, APPARATUS, AND SYSTEM", which is incorporated herein by reference in its entirety.

### TECHNICAL FIELD

Embodiments of the present invention relate to the field of communications technologies, and in particular, to a transmission control method, apparatus, and system.

### BACKGROUND

To meet service requirements of different networks, the same user equipment (User Equipment, UE) may be configured with many different wireless transceivers, such as a long term evolution (Long Term Evolution, LTE) base station and a 5th generation mobile communications (5G) base station. If working frequency bands of two transceivers of a plurality of wireless transceivers configured for the UE are adjacent, when the UE communicates with one wireless transceiver, the UE may be interfered with by the other wireless transceiver.

In an LTE network, interference for the UE may be eliminated by using an interference cancellation technology. Specifically, after the UE receives configuration information sent by a base station, if the UE is interfered with, the UE may report interference assistance information (indicating a frequency domain resource and a time domain resource that are used when the UE is interfered with) to the base station. After receiving the interference assistance information, the base station may send interference cancellation configuration information to the UE based on the interference assistance information, so that the UE may stop, based on the interference cancellation configuration information, performing data transmission on the foregoing time domain resource by using the frequency domain resource.

However, in the foregoing method, because the interference assistance information reported by the UE to the base station indicates the frequency domain resource and the time domain resource that are used when the UE is interfered with, the base station cannot learn, based on the interference assistance information, a specific time domain resource on which the UE is interfered with by the frequency domain resource, so that the base station may instruct the UE to stop performing data transmission on all time domain resources by using the frequency domain resource. Therefore, time domain resources available to the UE are reduced, and as a result, a transmission rate of the UE is decreased.

### SUMMARY

Embodiments of the present invention provide a transmission control method, apparatus, and system, to resolve a problem that time domain resources available to UE are reduced, and as a result, a transmission rate of the UE is decreased.

To resolve the foregoing technical problem, the following technical solutions are used in the embodiments of the present invention:

According to a first aspect, an embodiment of the present invention provides a transmission control method applied to UE, where the transmission control method includes: receiving interference cancellation configuration information sent by a base station, where the interference cancellation configuration information is used to instruct the UE to stop performing data transmission on a first time domain resource by using a first frequency domain resource, and the first time domain resource is a time domain resource that is interfered with when the UE performs data transmission on the first frequency domain resource; and stopping, based on the interference cancellation configuration information, performing data transmission on the first time domain resource by using the first frequency domain resource.

According to a second aspect, an embodiment of the present invention provides a transmission control method applied to a base station, where the transmission control method includes: obtaining interference cancellation configuration information, where the interference cancellation configuration information is used to instruct UE to stop performing data transmission on a first time domain resource by using a first frequency domain resource, and the first time domain resource is a time domain resource that is interfered with when the UE performs data transmission on the first frequency domain resource; and sending the interference cancellation configuration information to the UE.

According to a third aspect, an embodiment of the present invention provides UE, where the UE includes: a receiving unit and a control unit. The receiving unit is configured to receive interference cancellation configuration information sent by a base station, where the interference cancellation configuration information is used to instruct the UE to stop performing data transmission on a first time domain resource by using a first frequency domain resource, and the first time domain resource is a time domain resource that is interfered with when the UE performs data transmission on the first frequency domain resource. The control unit is configured to stop, based on the interference cancellation configuration information received by the receiving unit, performing data transmission on the first time domain resource by using the first frequency domain resource.

According to a fourth aspect, an embodiment of the present invention provides a base station, where the base station includes: an obtaining unit and a sending unit. The obtaining unit is configured to obtain interference cancellation configuration information, where the interference cancellation configuration information is used to instruct UE to stop performing data transmission on a first time domain resource by using a first frequency domain resource, and the first time domain resource is a time domain resource that is interfered with when the UE performs data transmission on the first frequency domain resource. The sending unit is configured to send, to the UE, the interference cancellation configuration information obtained by the obtaining unit.

According to a fifth aspect, an embodiment of the present invention provides UE, where the UE includes: a processor, a memory, and a computer program stored in the memory and executable on the processor, where the computer program, when executed by the processor, implements the steps of the transmission control method according to the foregoing first aspect.

According to a sixth aspect, an embodiment of the present invention provides a base station, where the base station includes: a processor, a memory, and a computer program stored in the memory and executable on the processor, where the computer program, when executed by the processor, implements the steps of the transmission control method according to the foregoing second aspect.

According to a seventh aspect, an embodiment of the present invention provides a communications system, where the communications system includes the UE according to the foregoing third aspect and the base station according to foregoing fourth aspect. Alternatively, the communications system includes the UE according to the foregoing fifth aspect and the base station according to the foregoing sixth aspect.

According to an eighth aspect, an embodiment of the present invention provides a computer readable storage medium, where the computer readable storage medium stores a computer program, and the computer program, when executed by the processor, implements the steps of the transmission control method according to the foregoing first aspect or second aspect.

In the embodiments of the present invention, the UE may receive the interference cancellation configuration information sent by the base station, and stop, based on an indication of the interference cancellation configuration information, performing data transmission on the first time domain resource by using the first frequency domain resource. Because the interference cancellation configuration information sent by the base station may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that the time domain resources available to the UE are reduced can be avoided, so that the transmission rate of the UE can be increased.

### BRIEF DESCRIPTION OF DRAWINGS

FIG. 1 is a schematic architectural diagram of a communications system according to an embodiment of the present invention;
FIG. 2 is a first schematic diagram of a transmission control method according to an embodiment of the present invention;
FIG. 3 is a second schematic diagram of a transmission control method according to an embodiment of the present invention;
FIG. 4 is a third schematic diagram of a transmission control method according to an embodiment of the present invention;
FIG. 5 is a fourth schematic diagram of a transmission control method according to an embodiment of the present invention;
FIG. 6 is a fifth schematic diagram of a transmission control method according to an embodiment of the present invention;
FIG. 7 is a first schematic structural diagram of UE according to an embodiment of the present invention;
FIG. 8 is a second schematic structural diagram of UE according to an embodiment of the present invention;
FIG. 9 is a first schematic structural diagram of a base station according to an embodiment of the present invention;
FIG. 10 is a second schematic structural diagram of a base station according to an embodiment of the present invention;
FIG. 11 is a schematic diagram of hardware of UE according to an embodiment of the present invention; and
FIG. 12 is a schematic diagram of hardware of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of this application.

In the specification and claims of this application, the terms such as "first" and "second" are used to distinguish different objects, but are not used to describe a particular sequence of the objects. For example, first configuration information, second configuration information, and the like are used to distinguish different configuration information, but are not used to describe a particular sequence of the configuration information. In the description of the embodiments of the present invention, unless otherwise specified, the meaning of "a plurality of" means two or more.

The term "and/or" in this specification describes an association relationship of associated objects, indicating that three relationships may exist. For example, A and/or B may indicate three cases: Only A exists, both A and B exist, and only B exists. A character "/" in this specification indicates an "or" relationship between associated objects. For example, A/B indicates A or B.

In the embodiments of the present invention, the term such as "exemplary" or "for example" is used to indicate an example, an instance, or a description. Any embodiment or design solution described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

The following describes some concepts and/or terms related in a transmission control method, apparatus, and system provided in the embodiments of the present invention.

Frequency Combination: In carrier aggregation, UE may use at least two frequencies (a frequency combination) to perform data transmission.

Embodiments of the present invention provide a transmission control method, apparatus, and system. UE may receive interference cancellation configuration information sent by a base station, and stop, based on an indication of the interference cancellation configuration information, performing data transmission on a first time domain resource by using a first frequency domain resource. Because the interference cancellation configuration information sent by the base station may instruct the UE to stop performing data transmission on the first time domain resource by using the first frequency domain resource, and the first time domain resource is a time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that time domain resources available to the UE are reduced can be avoided, so that a transmission rate of the UE can be increased.

The transmission control method, apparatus, and system provided in the embodiments of the present invention may be applied to a communications system. Specifically, the transmission control method, apparatus, and system may be applied to a process in which the UE controls data transmission in case of interference when the UE performs data transmission in the communications system.

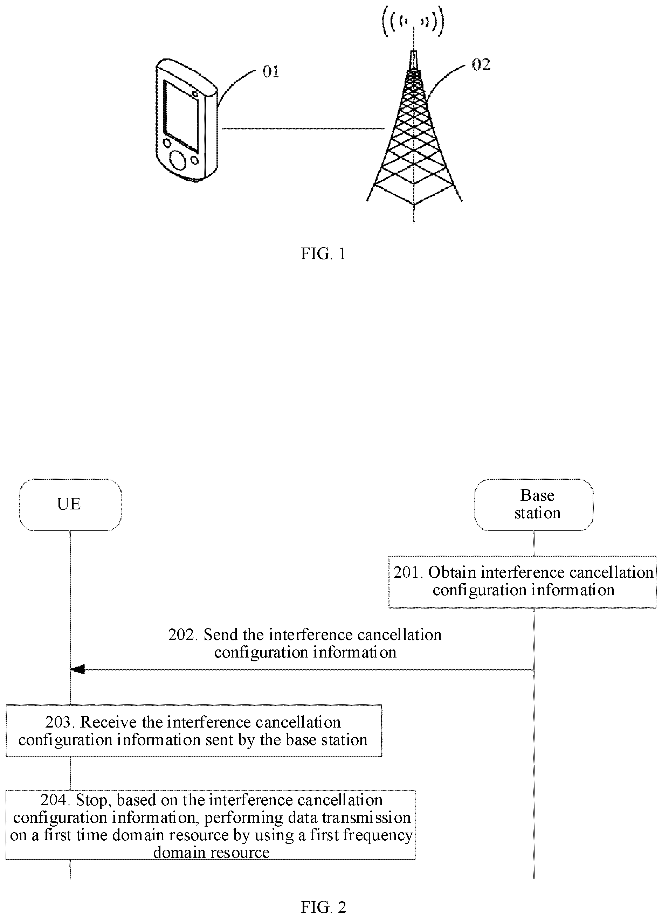

For example, FIG. 1 is a schematic architectural diagram of a communications system according to an embodiment of the present invention. As shown in FIG. 1, the communications system may include: UE 01 and a base station 02. A connection may be established between the UE 01 and the base station 02.

It should be noted that, in this embodiment of the present invention, as shown in FIG. 1, the foregoing UE 01 and base station 02 may be in a wireless connection. To indicate a connection relationship between the UE 01 and the base station 02 more clearly, in FIG. 1, a solid line is used to indicate the connection relationship between the UE 01 and the base station 02.

The UE is a device providing voice and/or data connectivity to a user, a handheld device having a wired/wireless connection function, or another processing device connected to a wireless modem. The UE may communicate with one or more core network devices through a radio access network (Radio Access Network, RAN). The UE may be a mobile terminal, such as a mobile phone (or referred to as a "cellular" phone) or a computer having a mobile terminal, or may be a portable, pocket, handheld, computer built-in, or vehicle-mounted mobile apparatus, which exchanges language and/or data with the RAN. For example, the mobile apparatus is a device such as a personal communication service (Personal Communication Service, PCS) phone, a cordless phone, a session initiation protocol (SIP) phone, a wireless local loop (Wireless Local Loop, WLL) station, or a personal digital assistant (Personal Digital Assistant, PDA). The UE may be alternatively referred to as a user agent or a terminal device.

The base station is an apparatus deployed in the RAN to provide a wireless communication function for the UE. The base station may include various forms of macro base stations, micro base stations, relay stations, access points, and the like. In systems using different wireless access technologies, names of devices having base station functions may be different. For example, in a 3rd generation mobile communications (3G) network, the device is referred to as a NodeB; in an LTE system, the device is referred to as an evolved NodeB (evolved NodeB, eNB or eNodeB), and in a 5G network, the device is referred to as a gNB. In addition, with evolution of the communication technology, the name of the "base station" may change.

The following describes in detail, through specific embodiments and application scenarios thereof with reference to the accompanying drawings, a transmission control method, apparatus, and system that are provided in the embodiments of the present invention.

Currently, in the prior art, because interference assistance information reported by UE to a base station indicates a frequency domain resource and a time domain resource that are used when the UE is interfered with, the base station cannot learn, based on the interference assistance information, a specific time domain resource on which the UE is interfered with by the frequency domain resource, so that the base station may instruct the UE to stop performing data transmission on all time domain resources by using the frequency domain resource. Therefore, time domain resources available to the UE are reduced, and as a result, a transmission rate of the UE is decreased.

To resolve the foregoing technical problems, according to a transmission control method provided in embodiments of the present invention, the following uses interaction between UE and a base station as an example to exemplarily describe the transmission control method provided in the embodiments of the present invention.

Based on the communications system shown in FIG. 1, an embodiment of the present invention provides a transmission control method. As shown in FIG. 2, the transmission control method may include the following Step 201 to Step 204.

Step 201: A base station obtains interference cancellation configuration information.

In this embodiment of the present invention, the interference cancellation configuration information is used to instruct UE to stop performing data transmission on a first time domain resource by using a first frequency domain resource, and the first time domain resource is a time domain resource that is interfered with when the UE performs data transmission on the first frequency domain resource.

It should be noted that in this embodiment of the present invention, interference for the UE when the UE performs data transmission on the first frequency domain resource may be understood as interference from another base station for the UE when the UE performs data transmission on the first frequency domain resource.

Optionally, in this embodiment of the present invention, the foregoing interference cancellation configuration information may include at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

Optionally, in this embodiment of the present invention, the foregoing first time domain resource may be indicated by at least one of the following: a time slot identifier, a subframe identifier, a system frame number (System Frame Number, SFN) identifier, and a first bitmap; and the first frequency domain resource may be indicated by a frequency combination identifier.

Optionally, in this embodiment of the present invention, the foregoing frequency combination may include at least one of the following: a band combination (Band Combination, including at least two bands), a frequency channel number combination (including at least two frequency channel numbers), and a bandwidth part (Bandwidth Part, BWP) combination (including at least two BWPs).

It should be noted that the foregoing frequency combination may be a combination of frequencies in different networks. For example, a frequency combination may include a frequency in an LTE network and a frequency in a New Radio (New Radio, NR) network.

It may be understood that in this embodiment of the present invention, the first time domain resource may include a time domain resource indicated by the time slot identifier (for example, a first time slot), a time domain resource indicated by the subframe identifier (for example, a first subframe), a time domain resource indicated by the SFN identifier (for example, a first SFN), and a time domain resource indicated by the first bitmap.

It may be understood that in this embodiment of the present invention, the foregoing first frequency domain resource may be a frequency domain resource indicated by the frequency combination identifier (for example, a first frequency combination).

Optionally, in this embodiment of the present invention, the foregoing first bitmap may be indicated by first bitmap information, the first bitmap information may include a time domain identifier (or a time domain number) corresponding to each bit in the first bitmap, and a value of each bit, and a value of a bit is used to indicate whether the UE stops performing data transmission on a time domain resource indicated by a time domain identifier corresponding to the bit.

For example, it is assumed that a bit in the first bitmap is bit 1. When a value of bit 1 is 1, it may be used to instruct the UE to stop performing data transmission on a time domain resource indicated by a time domain identifier corresponding to the bit; or when a value of bit 1 is 0, it may be used to instruct the UE to prohibit stopping performing data transmission on a time domain resource indicated by a time domain identifier corresponding to the bit.

Optionally, in this embodiment of the present invention, the foregoing time domain identifier corresponding to each bit may include at least one of the following: a time slot identifier, a subframe identifier, and an SFN identifier.

It should be noted that specific methods for obtaining the interference cancellation configuration information by the base station will be described in detail in the following embodiments. Details are not described herein.

Step 202: The base station sends the interference cancellation configuration information to UE.

Step 203: The UE receives the interference cancellation configuration information sent by the base station.

Step 204: The UE stops, based on the interference cancellation configuration information, performing data transmission on a first time domain resource by using a first frequency domain resource.

In this embodiment of the present invention, after the UE receives the interference cancellation configuration information, the UE may be controlled to stop, based on an indication of the interference cancellation configuration information, performing data transmission on the first time domain resource by using the first frequency domain resource.

It may be understood that in this embodiment of the present invention, after the UE receives the interference cancellation configuration information, when the interference cancellation configuration information is used to instruct the UE to stop sending data on the first time domain resource by using the first frequency domain resource, the UE may stop, based on the indication of the interference cancellation configuration information, sending data on the first time domain resource by using the first frequency domain resource; and when the interference cancellation configuration information is used to instruct the UE to stop receiving data on the first time domain resource by using the first frequency domain resource, the UE may stop, based on the indication of the interference cancellation configuration information, receiving data on the first time domain resource by using the first frequency domain resource.

For example, it is assumed that the first frequency domain resource is a frequency combination A, and time domain resources corresponding to the frequency combination A are a time domain resource 1, a time domain resource 2, and a time domain resource 3 respectively, and a time domain resource that is interfered with when the UE performs data transmission on the frequency combination A is the time domain resource 1. After receiving the interference cancellation configuration information, the UE may stop performing data transmission on the time domain resource 1 by using the frequency combination A.

It may be understood that in the foregoing example, the UE stops performing data transmission only on the time domain resource 1 by using the frequency combination A, and the UE may perform data transmission on the time domain resource 2 and/or the time domain resource 3 by using the frequency combination A.

According to the transmission control method provided in this embodiment of the present invention, the UE may receive the interference cancellation configuration information sent by the base station, and stop, based on the indication of the interference cancellation configuration information, performing data transmission on the first time domain resource by using the first frequency domain resource. Because the interference cancellation configuration information sent by the base station may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that time domain resources available to the UE are reduced can be avoided, so that a transmission rate of the UE can be increased.

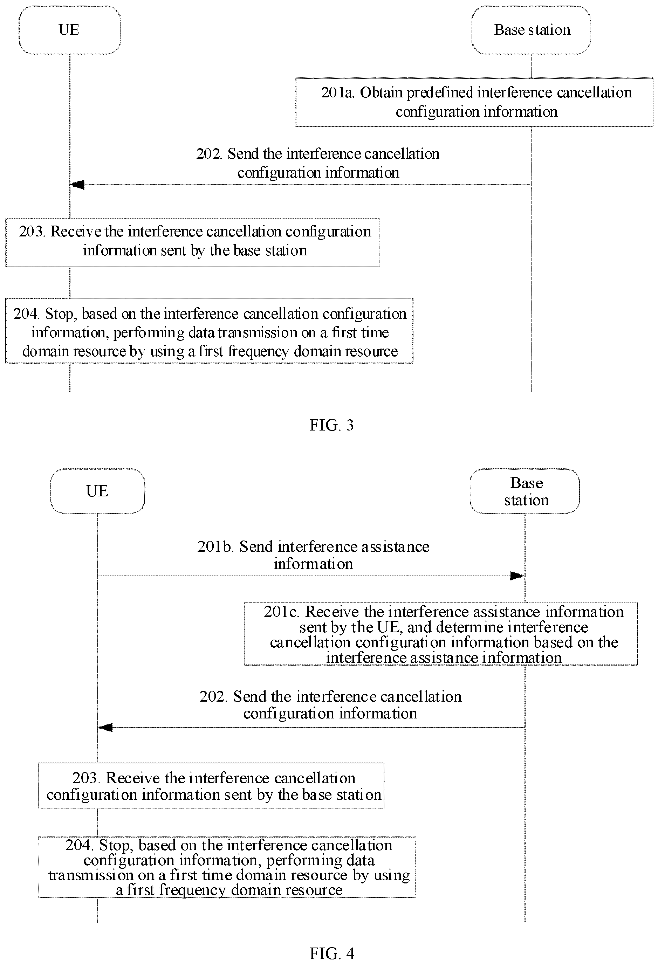

Optionally, in a possible implementation of this embodiment of the present invention, with reference to FIG. 2, as shown in FIG. 3, the foregoing Step 201 may be specifically implemented by the following Step 201a.

Step 201a: The base station obtains the predefined interference cancellation configuration information.

In this embodiment of the present invention, because the base station may send the predefined interference cancellation configuration information to the UE, the predefined interference cancellation configuration information may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, the interference generated when the UE performs data transmission on the first frequency domain resource can be eliminated, and in addition, that the time domain resources available to the UE are reduced can be avoided, so that the transmission rate of the UE can be increased.

Optionally, in another possible implementation of this embodiment of the present invention, with reference to FIG. 2, as shown in FIG. 4, the foregoing Step 201 may be specifically implemented by the following Step 201b and Step 201c.

Step 201b: The UE sends interference assistance information to the base station.

In this embodiment of the present invention, the foregoing interference assistance information is used to indicate the first frequency domain resource and the first time domain resource.

Optionally, in this embodiment of the present invention, the foregoing interference assistance information may include first assistance information and second assistance information, the first assistance information is used to indicate the first frequency domain resource, and the second assistance information is used to indicate the first time domain resource.

Optionally, in this embodiment of the present invention, the foregoing first assistance information may include a frequency combination identifier; and the second assistance information may include at least one of the following: transmission mode configuration information and second bitmap information.

Optionally, in this embodiment of the present invention, the foregoing first assistance information may further include a type of system in which the UE is interfered with, for example, may include an LTE system, a global positioning system (Global Positioning System, GPS), a Beidou system (Beidou System, BDS), a global navigation satellite system (Global Navigation Satellite System, GLONASS), a wireless local area network (WLAN), or Bluetooth.

Optionally, in this embodiment of the present invention, the foregoing transmission mode configuration information may include discontinuous reception configuration information and discontinuous transmission configuration information.

Optionally, in this embodiment of the present invention, the foregoing transmission mode configuration information may include a time slot offset (slot offset); and the second bitmap information may include a time slot identifier.

Optionally, in this embodiment of the present invention, the foregoing transmission mode configuration information may further include a time slot cycle, a time slot activation time, and the like.

Step 201c: The base station receives the interference assistance information sent by the UE, and determines the interference cancellation configuration information based on the interference assistance information.

In this embodiment of the present invention, the base station may determine the interference cancellation configuration information based on an indication of the interference assistance information (the interference assistance information is used to indicate the first frequency domain resource and the first time domain resource, and the first time domain resource is the time domain resource that is interfered with when the UE performs data transmission on the first frequency domain resource), to instruct the UE to stop performing data transmission on the first time domain resource by using the first frequency domain resource.

In this embodiment of the present invention, the base station may determine the interference cancellation configuration information based on the interference assistance information (the interference assistance information may indicate the first frequency domain resource and the first time domain resource) sent by the UE. Because the base station may send the determined interference cancellation configuration information to the UE, the interference cancellation configuration information instructs the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, the interference generated when the UE performs data transmission on the first frequency domain resource can be eliminated, and in addition, that the time domain resources available to the UE are reduced can be avoided, so that the transmission rate of the UE can be increased.

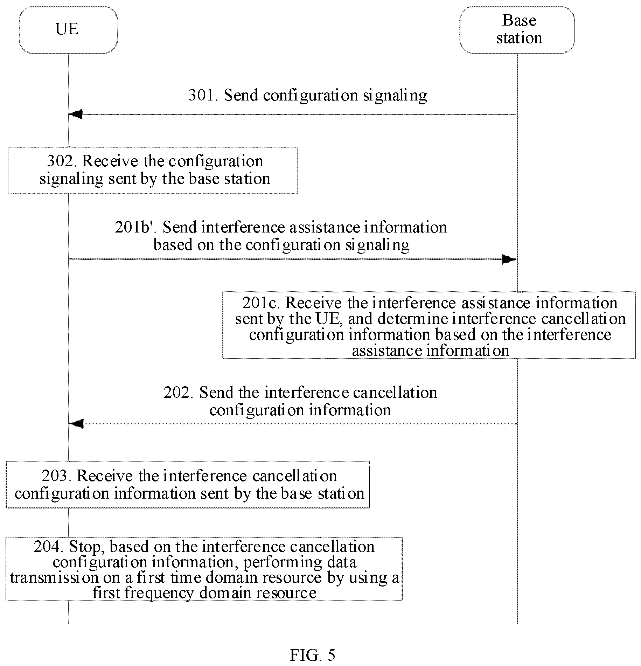

Optionally, in this embodiment of the present invention, with reference to FIG. 4, as shown in FIG. 5, before the foregoing Step 201b, the transmission control method provided in this embodiment of the present invention may further include the following Step 301 and Step 302, and the foregoing Step 201b may be specifically implemented by the following Step 201b'.

Step 301: The base station sends configuration signaling to the UE.

In this embodiment of the present invention, the foregoing configuration signaling is used to instruct the UE to send interference assistance information to the base station.

Optionally, in this embodiment of the present invention, the foregoing configuration signaling may include at least one of first configuration signaling and second configuration signaling, the first configuration signaling is used to instruct the UE to prohibit reporting the interference assistance information within a duration in which a timer is started, and the second configuration signaling is used to instruct the UE to report the interference assistance information.

Step 302: The UE receives the configuration signaling sent by the base station.

Step 201b': The UE sends the interference assistance information to the base station based on the configuration signaling.

In this embodiment of the present invention, the UE may send the interference assistance information to the base station based on an indication of the configuration signaling.

Optionally, in this embodiment of the present invention, when the configuration signaling includes at least the second configuration signaling, after the UE sends the interference assistance information to the base station, the UE may start the timer, and prohibit reporting the interference assistance information within the duration in which the timer is started.

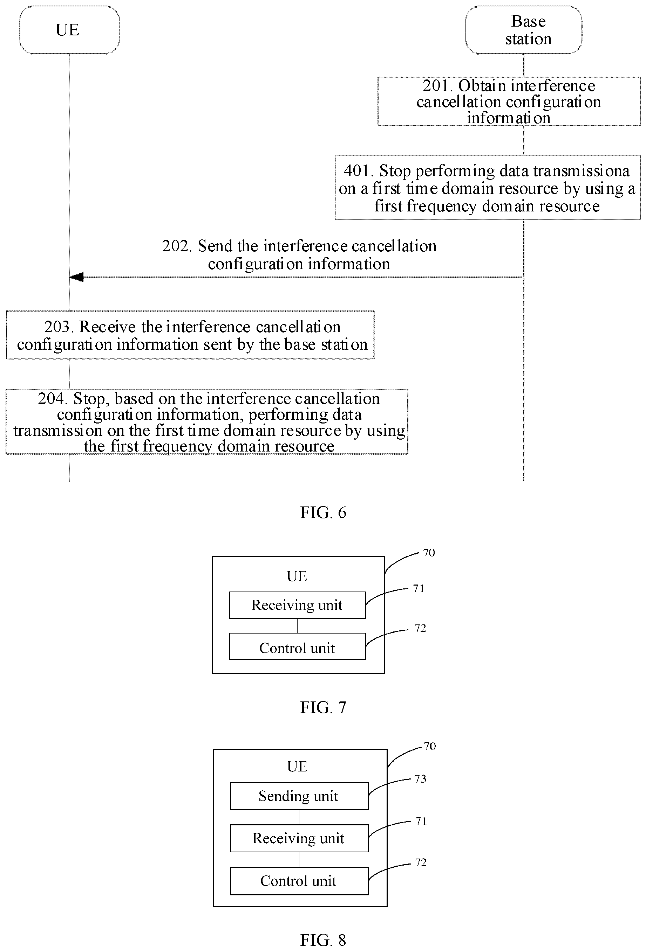

Optionally, in this embodiment of the present invention, with reference to FIG. 2, as shown in FIG. 6, after the foregoing Step 201, the transmission control method provided in this embodiment of the present invention may further include the following Step 401.

Step 401: The base station stops performing data transmission on the first time domain resource by using the first frequency domain resource.

In this embodiment of the present invention, after obtaining the interference cancellation configuration information, the base station may control, by itself, the base station to stop performing data transmission (send data or receive data) on the first time domain resource by using the first frequency domain resource.

It should be noted that in this embodiment of the present invention, a performing sequence of Step 401 and Step 202 is not limited. Specifically, in an implementation, Step 401 may be performed first and then Step 202 is performed. In other words, the base station may first stop performing data transmission on the first time domain resource by using the first frequency domain resource, and then send the interference cancellation configuration information to the UE. In another implementation, Step 202 may be performed first and then Step 401 is performed. In other words, the base station may first send the interference cancellation configuration information to the UE, and then stop performing data transmission on the first time domain resource by using the first frequency domain resource. In still another implementation, Step 202 and Step 401 may be performed simultaneously. In other words, the base station may simultaneously send the interference cancellation configuration information to the UE and stop performing data transmission on the first time domain resource by using the first frequency domain resource.

In this embodiment of the present invention, because after obtaining the interference cancellation configuration information, the base station may stop performing data transmission on the first time domain resource by using the first frequency domain resource, and the first time domain resource is the time domain resource that is interfered with when the UE performs data transmission on the first frequency domain resource, the base station stops performing, by using the first frequency domain resource, data transmission only on the first time domain resource that is interfered with, and can still perform, by using the first frequency domain resource, data transmission on another time domain resource that is not interfered with. In this way, that time domain resources available to the base station are reduced can be avoided, so that a data throughput rate of the base station can be increased.

FIG. 7 is a possible schematic structural diagram of UE according to an embodiment of the present invention. As shown in FIG. 7, the UE 70 may include: a receiving unit 71 and a control unit 72.

The receiving unit 71 is configured to receive interference cancellation configuration information sent by a base station, where the interference cancellation configuration information is used to instruct the UE to stop performing data transmission on a first time domain resource by using a first frequency domain resource, and the first time domain resource is a time domain resource that is interfered with when the UE performs data transmission on the first frequency domain resource. The control unit 72 is configured to stop, based on the interference cancellation configuration information received by the receiving unit 71, performing data transmission on the first time domain resource by using the first frequency domain resource.

In a possible implementation, the foregoing interference cancellation configuration information may include at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

In a possible implementation, the foregoing first time domain resource may be indicated by at least one of the following: a time slot identifier, a subframe identifier, an SFN identifier, and a first bitmap; and the foregoing first frequency domain resource may be indicated by a frequency combination identifier.

In a possible implementation, the foregoing first bitmap is indicated by first bitmap information, the first bitmap information may include a time domain identifier corresponding to each bit in the first bitmap, and a value of each bit, and a value of a bit is used to indicate whether the UE stops performing data transmission on a time domain resource indicated by a time domain identifier corresponding to the bit.

In a possible implementation, the foregoing time domain identifier corresponding to each bit may include at least one of the following: a time slot identifier, a subframe identifier, and an SFN identifier.

In a possible implementation, with reference to FIG. 7, as shown in FIG. 8, the UE 70 provided in this embodiment of the present invention may further include: a sending unit 73. The sending unit 73 is configured to send interference assistance information to the base station before the receiving unit 71 receives the interference cancellation configuration information sent by the base station, where the interference assistance information is used to indicate the first frequency domain resource and the first time domain resource.

In a possible implementation, the foregoing interference assistance information may include first assistance information and second assistance information, the first assistance information is used to indicate the first frequency domain resource, and the second assistance information is used to indicate the first time domain resource.

In a possible implementation, the foregoing first assistance information may include a frequency combination identifier; and the foregoing second assistance information may include at least one of the following: transmission mode configuration information and second bitmap information.

In a possible implementation, the foregoing transmission mode configuration information may include a time slot offset; and the foregoing second bitmap information may include a time slot identifier.

The UE provided in this embodiment of the present invention can implement the processes implemented by the UE in the foregoing method embodiments. To avoid repetition, details are not described herein again.

According to the UE provided in this embodiment of the present invention, the UE may receive the interference cancellation configuration information sent by the base station, and stop, based on an indication of the interference cancellation configuration information, performing data transmission on the first time domain resource by using the first frequency domain resource. Because the interference cancellation configuration information sent by the base station may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that time domain resources available to the UE are reduced can be avoided, so that a transmission rate of the UE can be increased.

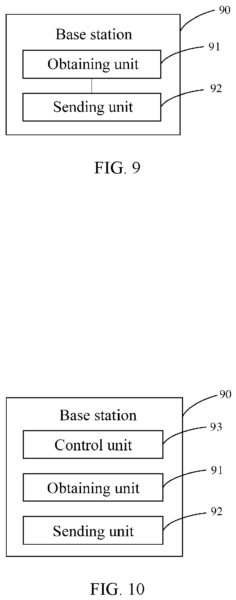

FIG. 9 is a possible schematic structural diagram of a base station according to an embodiment of the present invention. As shown in FIG. 9, the base station 90 may include: an obtaining unit 91 and a sending unit 92.

The obtaining unit 91 is configured to obtain interference cancellation configuration information, where the interference cancellation configuration information is used to instruct UE to stop performing data transmission on a first time domain resource by using a first frequency domain resource, and the first time domain resource is a time domain resource that is interfered with when the UE performs data transmission on the first frequency domain resource. The sending unit 92 is configured to send, to the UE, the interference cancellation configuration information obtained by the obtaining unit 91.

In a possible implementation, the foregoing obtaining unit 91 is specifically configured to: obtain the predefined interference cancellation configuration information; or receive interference assistance information sent by the UE, and determine the interference cancellation configuration information based on the interference assistance information, where the interference assistance information is used to indicate the first frequency domain resource and the first time domain resource.

In a possible implementation, the foregoing interference cancellation configuration information may include at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

In a possible implementation, the foregoing first time domain resource may be indicated by at least one of the following: a time slot identifier, a subframe identifier, an SFN identifier, and a first bitmap; and the foregoing first frequency domain resource may be indicated by a frequency combination identifier.

In a possible implementation, the foregoing first bitmap is indicated by first bitmap information, the first bitmap information may include a time domain identifier corresponding to each bit in the first bitmap, and a value of each bit, and a value of a bit is used to indicate whether the UE stops performing data transmission on a time domain resource indicated by a time domain identifier corresponding to the bit.

In a possible implementation, the foregoing time domain identifier corresponding to each bit may include at least one of the following: a time slot identifier, a subframe identifier, and an SFN identifier.

In a possible implementation, the foregoing interference assistance information may include first assistance information and second assistance information, the first assistance information is used to indicate the first frequency domain resource, and the second assistance information is used to indicate the first time domain resource.

In a possible implementation, the foregoing first assistance information may include a frequency combination identifier; and the foregoing second assistance information may include at least one of the following: transmission mode configuration information and second bitmap information.

In a possible implementation, the foregoing transmission mode configuration information may include a time slot offset; and the foregoing second bitmap information may include a time slot identifier.

In a possible implementation, with reference to FIG. 9, as shown in FIG. 10, the base station 90 provided in this embodiment of the present invention may further include: a control unit 93. The control unit 93 is configured to stop, after the obtaining unit 91 obtains the interference cancellation configuration information, performing data transmission on the first time domain resource by using the first frequency domain resource.

The base station provided in this embodiment of the present invention can implement the processes implemented by the base station in the foregoing method embodiments. To avoid repetition, details are not described herein again.

According to the base station provided in this embodiment of the present invention, the base station may obtain the interference cancellation configuration information, and send the interference cancellation configuration information to the UE, where the interference cancellation configuration information is used to instruct the UE to stop performing data transmission on the first time domain resource by using the first frequency domain resource, and the first time domain resource is the time domain resource that is interfered with when the UE performs data transmission on the first frequency domain resource. Because the interference cancellation configuration information sent by the base station may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that time domain resources available to the UE are reduced can be avoided, so that a transmission rate of the UE can be increased.

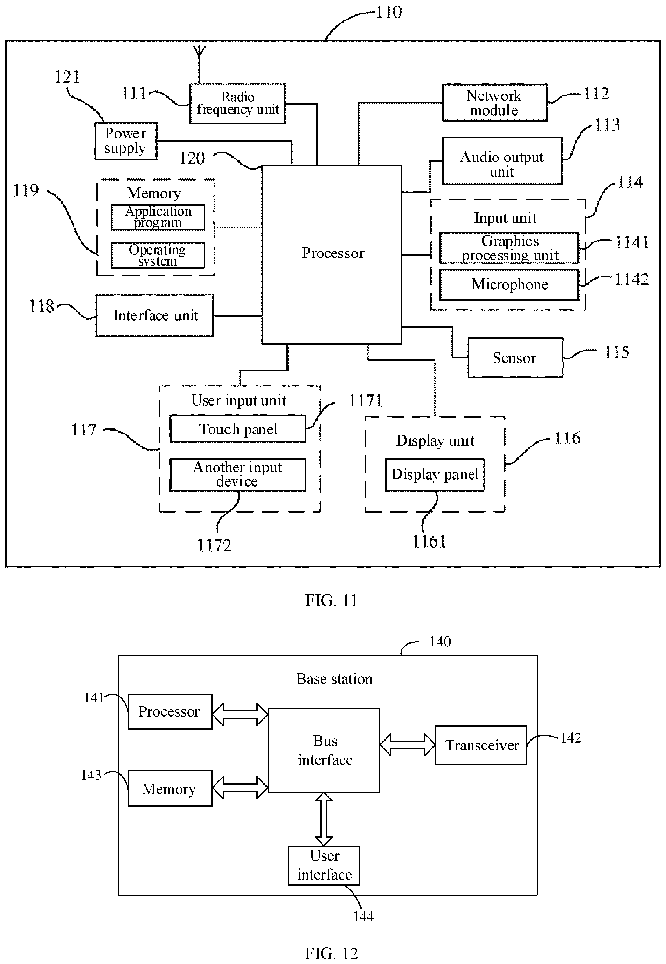

FIG. 11 is a schematic diagram of hardware of UE according to an embodiment of the present invention. As shown in FIG. 11, the UE 110 includes but is not limited to: a radio frequency unit 111, a network module 112, an audio output unit 113, an input unit 114, a sensor 115, a display unit 116, a user input unit 117, an interface unit 118, a memory 119, a processor 120, a power supply 121, and other components.

It should be noted that a person skilled in the art may understand that the structure of the UE shown in FIG. 11 does not constitute a limitation to the UE. The UE may include more or fewer components than those shown in FIG. 11, or a combination of some components, or an arrangement of different components. For example, in this embodiment of the present invention, the UE includes but is not limited to a mobile phone, a tablet computer, a notebook computer, a palmtop computer, a vehicle-mounted terminal, a wearable device, a pedometer, or the like.

The processor 120 may be configured to: receive interference cancellation configuration information sent by a base station, where the interference cancellation configuration information is used to instruct the UE to stop performing data transmission on a first time domain resource by using a first frequency domain resource, and the first time domain resource is a time domain resource that is interfered with when the UE performs data transmission on the first frequency domain resource; and stop, based on the interference cancellation configuration information, performing data transmission on the first time domain resource by using the first frequency domain resource.

According to the UE provided in this embodiment of the present invention, the UE may receive the interference cancellation configuration information sent by the base station, and stop, based on an indication of the interference cancellation configuration information, performing data transmission on the first time domain resource by using the first frequency domain resource. Because the interference cancellation configuration information sent by the base station may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that time domain resources available to the UE are reduced can be avoided, so that a transmission rate of the UE can be increased.

It should be understood that, in this embodiment of the present invention, the radio frequency unit 111 may be configured to receive and transmit information, or receive and transmit signals during a call. Specifically, the radio frequency unit 111 receives downlink data from the base station, and transmits the downlink data to the processor 120 for processing; and in addition, transmits uplink data to the base station. Generally, the radio frequency unit 111 includes but is not limited to an antenna, at least one amplifier, a transceiver, a coupler, a low noise amplifier, a duplexer, and the like. In addition, the radio frequency unit 111 may also communicate with another device through a wireless communications system and network.

UE provides a user with wireless broadband Internet access through the network module 112, for example, helps the user send and receive emails, browse web pages, and access streaming media.

The audio output unit 113 may convert audio data received by the radio frequency unit 111 or the network module 112 or stored in the memory 119 into an audio signal, and output the audio signal into sound. In addition, the audio output unit 113 may also provide audio output related to a specific function performed by the UE 110 (for example, call signal receiving sound or message receiving sound). The audio output unit 113 includes a speaker, a buzzer, a receiver, and the like.

The input unit 114 is configured to receive an audio signal or a video signal. The input unit 114 may include a graphics processing unit (Graphics Processing Unit, GPU) 1141 and a microphone 1142. The graphics processing unit 1141 is configured to process image data of a static picture or a video obtained by an image capture apparatus (for example, a camera) in video capture mode or image capture mode. A processed image frame may be displayed on the display unit 116. The image frames processed by the GPU 1141 may be stored in the memory 119 (or another storage medium) or sent by the radio frequency unit 111 or the network module 112. The microphone 1142 may receive sound and can process such sound into audio data. Processed audio data may be converted, in telephone call mode, into a format that can be sent to a mobile communication base station via the radio frequency unit 111 for output.

The UE 110 further includes at least one sensor 115, for example, a light sensor, a motion sensor, and other sensors. Specifically, the light sensor includes an ambient light sensor and a proximity sensor, where the ambient light sensor may adjust brightness of the display panel 1161 depending on brightness of ambient light, and the proximity sensor may turn off the display panel 1161 and/or backlight when the UE 110 moves towards the ear. As a motion sensor, an accelerometer sensor may detect magnitude of acceleration in various directions (usually three axes), may detect magnitude and the direction of gravity when stationary, may be configured to identify UE postures (such as horizontal and vertical screen switch, related games, and magnetometer posture calibration), may perform functions related to vibration identification (such as a pedometer and a knock), and the like. The sensor 115 may further include a fingerprint sensor, a pressure sensor, an iris sensor, a molecular sensor, a gyroscope, a barometer, a hygrometer, a thermometer, an infrared sensor, or the like. Details are not described herein.

The display unit 116 is configured to display information input by the user or information provided to the user. The display unit 116 may include the display panel 1161, and the display panel 1161 may be configured in a form of a liquid crystal display (Liquid Crystal Display, LCD), an organic light-emitting diode (Organic Light-Emitting Diode, OLED), or the like.

The user input unit 117 may be configured to receive input numeric or character information, and generate key signal inputs related to user settings and function control of the UE. Specifically, the user input unit 117 includes a touch panel 1171 and another input device 1172. The touch panel 1171, also called a touch screen, may collect a touch operation of the user on or near the touch panel 1171 (For example, the user uses any suitable object or accessory such as a finger or a stylus to operate on or near the touch panel 1171). The touch panel 1171 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, transmits the contact coordinates to the processor 120, receives a command sent by the processor 120, and executes the command. In addition, the touch panel 1171 may be implemented in various types such as resistive, capacitive, infrared, and surface acoustic wave. In addition to the touch panel 1171, the user input unit 117 may further include the another input device 1172. Specifically, the another input device 1172 may include but is not limited to a physical keyboard, function keys (such as a volume control key and a switch key), a trackball, a mouse, and a joystick. Details are not described herein.

Further, the touch panel 1171 may cover the display panel 1161. When detecting a touch operation on or near the touch panel 1171, the touch panel 1171 transmits the touch operation to the processor 120 to determine a type of a touch event. Then the processor 120 provides corresponding visual output on the display panel 1161 based on the type of the touch event. Although in FIG. 11, the touch panel 1171 and the display panel 1161 are configured as two independent components to implement input and output functions of the UE, in some embodiments, the touch panel 1171 and the display panel 1161 may be integrated to implement the input and output functions of the UE. Details are not limited herein.

The interface unit 118 is an interface for connecting an external apparatus to the UE 110. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, an earphone port, and the like. The interface unit 118 may be configured to receive an input (for example, data information and power) from the external apparatus and transmit the received input to one or more elements in the UE 110, or perform data transmission between the UE 110 and the external apparatus.

The memory 119 may be configured to store software programs and various data. The memory 119 may mainly include a program storage area and a data storage area. The program storage area may store an operating system, an application program required by at least one function (such as a sound playback function and an image playback function), and the like. The data storage area may store data (such as audio data and a phone book) created based on use of the mobile phone, and the like. In addition, the memory 119 may include a high-speed random access memory or a nonvolatile memory, for example, at least one disk storage device, a flash memory, or another volatile solid-state storage device.

The processor 120 is a control center of the UE, connects various parts of the entire UE by using various interfaces and circuits, and performs various functions of the UE and processes data by running or executing software programs and/or modules stored in the memory 119 and invoking data stored in the memory 119, so as to monitor the UE as a whole. The processor 120 may include one or more processing units. Optionally, the processor 120 may integrate an application processor with a modem processor. The application processor mainly processes the operating system, a user interface, the application program, and the like, and the modem processor mainly processes wireless communication. It may be understood that the foregoing modem processor may not be integrated into the processor 120.

The UE 110 may further include the power supply 121 (for example, a battery) configured to supply power to various components. Optionally, the power supply 121 may be logically connected to the processor 120 through a power management system, so as to implement functions such as managing charging, discharging, and power consumption through the power management system.

In addition, the UE 110 includes some function modules not shown. Details are not described herein.

Optionally, an embodiment of the present invention further provides UE, including a processor 120 and a memory 119 that are shown in FIG. 11, and a computer program stored in the memory 119 and executable on the processor 120, where the computer program, when executed by the processor 120, implements the processes of the foregoing method embodiments, and the same technical effects can be achieved. To avoid repetition, details are not described herein again.

An embodiment of the present invention further provides a computer readable storage medium, where the computer readable storage medium stores a computer program, where the computer program, when executed by the processor 120 shown in FIG. 11, implements the processes of the foregoing method embodiments, and the same technical effects can be achieved. To avoid repetition, details are not described herein again. The computer readable storage medium may be a read-only memory (Read-Only Memory, ROM), a random access memory (Random Access Memory, RAM), a magnetic disk, a compact disc, or the like.

FIG. 12 is a schematic diagram of hardware of a base station according to an embodiment of the present invention. As shown in FIG. 12, the base station 140 includes: a processor 141, a transceiver 142, a memory 143, a user interface 144, and a bus interface.

The processor 141 may be configured to: obtain interference cancellation configuration information, where the interference cancellation configuration information is used to instruct UE to stop performing data transmission on a first time domain resource by using a first frequency domain resource, and the first time domain resource is a time domain resource that is interfered with when the UE performs data transmission on the first frequency domain resource; and send the interference cancellation configuration information to the UE.

According to the base station provided in this embodiment of the present invention, the base station may obtain the interference cancellation configuration information, and send the interference cancellation configuration information to the UE, where the interference cancellation configuration information is used to instruct the UE to stop performing data transmission on the first time domain resource by using the first frequency domain resource, and the first time domain resource is the time domain resource that is interfered with when the UE performs data transmission on the first frequency domain resource. Because the interference cancellation configuration information sent by the base station may instruct the UE to stop performing data transmission on the first time domain resource by using the first frequency domain resource, and the first time domain resource is the time domain resource that is interfered with when the UE performs data transmission on the first frequency domain resource, the UE stops performing, by using the first frequency domain resource, data transmission only on the first time domain resource that is interfered with, and can still perform, by using the first frequency domain resource, data transmission on another time domain resource that is not interfered with. In this way, interference generated when the UE performs data transmission on the first frequency domain resource can be eliminated, and in addition, that time domain resources available to the UE are reduced can be avoided, so that a transmission rate of the UE can be increased.

The processor 141 may be responsible for managing a bus architecture and general processing, and may be configured to read and execute programs in the memory 143 to implement processing functions and control on the base station 140. The memory 143 may store data used by the processor 141 when the processor 141 performs an operation. The processor 141 and the memory 143 may be integrated together or disposed separately.

In this embodiment of the present invention, the base station 140 may further include: a computer program stored in the memory 143 and executable on the processor 141, where the computer program, when executed by the processor 141, implements the steps of the methods provided in the embodiments of the present invention.

In FIG. 12, the bus architecture may include any quantity of interconnected buses and bridges, which are specifically connected together by various circuits of one or more processors represented by the processor 141 and a memory represented by the memory 143. The bus architecture may further connect together various other circuits of a peripheral device, a voltage stabilizer, a power management circuit, and the like, which are known in this art and will not be further described in this embodiment of the present invention. The bus interface provides an interface. The transceiver 142 may include a plurality of elements, that is, include a transmitter and a receiver, and provide units for communication with various other apparatuses on a transmission medium. For different UE, the user interface 144 may alternatively be an interface for externally and internally connecting required equipment. The connected equipment includes but is not limited to a keypad, a display, a speaker, a microphone, a joystick, and the like.

It should be noted that in this specification, the terms "comprise", "include" and any other variants thereof are intended to cover non-exclusive inclusion, so that a process, a method, an article, or an apparatus that includes a series of elements not only includes these very elements, but may also include other elements not expressly listed, or also include elements inherent to this process, method, article, or apparatus. Without being subject to further limitations, an element defined by a phrase "including a ......" does not exclude presence of other identical elements in the process, method, article, or apparatus that includes the very element.

By means of the foregoing description of the embodiments, a person skilled in the art may clearly understand that the method in the foregoing embodiments may be implemented by software with a necessary general hardware platform. Certainly, the method in the foregoing embodiments may also be implemented by hardware. However, in many cases, the former is a preferred embodiment. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations. The foregoing specific implementations are merely schematic instead of restrictive. Under enlightenment of this application, a person of ordinary skills in the art may make many forms without departing from the protection scope of aims of this application and claims, all of which fall within the protection of this application.

## Claims

1. A transmission control method applied to user equipment UE, wherein the method comprises:
receiving interference cancellation configuration information sent by a base station, wherein the interference cancellation configuration information is used to instruct the UE to stop performing data transmission on a first time domain resource by using a first frequency domain resource, and the first time domain resource is a time domain resource that is interfered when the UE performs data transmission on the first frequency domain resource; and
stopping, based on the interference cancellation configuration information, performing data transmission on the first time domain resource by using the first frequency domain resource.

2. The method according to claim 1, wherein the interference cancellation configuration information comprises at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

3. The method according to claim 1 or 2, wherein the first time domain resource is indicated by at least one of the following: a time slot identifier, a subframe identifier, a system frame number SFN identifier, and a first bitmap; and
the first frequency domain resource is indicated by a frequency combination identifier.

4. The method according to claim 3, wherein the first bitmap is indicated by first bitmap information, the first bitmap information comprises a time domain identifier corresponding to each bit in the first bitmap, and a value of each bit, and a value of a bit is used to indicate whether the UE stops performing data transmission on a time domain resource indicated by a time domain identifier corresponding to the bit.

5. The method according to claim 4, wherein the time domain identifier corresponding to each bit comprises at least one of the following:
a time slot identifier, a subframe identifier, and an SFN identifier.

6. The method according to claim 1, wherein before the receiving interference cancellation configuration information sent by a base station, the method further comprises:
sending interference assistance information to the base station, wherein the interference assistance information is used to indicate the first frequency domain resource and the first time domain resource.

7. The method according to claim 6, wherein the interference assistance information comprises first assistance information and second assistance information, the first assistance information is used to indicate the first frequency domain resource, and the second assistance information is used to indicate the first time domain resource.

8. The method according to claim 7, wherein the first assistance information comprises a frequency combination identifier; and
the second assistance information comprises at least one of the following: transmission mode configuration information and second bitmap information.

9. The method according to claim 8, wherein the transmission mode configuration information comprises a time slot offset; and
the second bitmap information comprises a time slot identifier.

10. A transmission control method applied to a base station, wherein the method comprises:
obtaining interference cancellation configuration information, wherein the interference cancellation configuration information is used to instruct user equipment UE to stop performing data transmission on a first time domain resource by using a first frequency domain resource, and the first time domain resource is a time domain resource that is interfered when the UE performs data transmission on the first frequency domain resource; and
sending the interference cancellation configuration information to the UE.

11. The method according to claim 10, wherein the obtaining interference cancellation configuration information comprises:
obtaining the predefined interference cancellation configuration information; or
receiving interference assistance information sent by the UE, and determining the interference cancellation configuration information based on the interference assistance information, wherein the interference assistance information is used to indicate the first frequency domain resource and the first time domain resource.

12. The method according to claim 10 or 11, wherein the interference cancellation configuration information comprises at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

13. The method according to claim 10 or 11, wherein the first time domain resource is indicated by at least one of the following: a time slot identifier, a subframe identifier, a system frame number SFN identifier, and a first bitmap; and
the first frequency domain resource is indicated by a frequency combination identifier.

14. The method according to claim 13, wherein the first bitmap is indicated by first bitmap information, the first bitmap information comprises a time domain identifier corresponding to each bit in the first bitmap, and a value of each bit, and a value of a bit is used to indicate whether the UE stops performing data transmission on a time domain resource indicated by a time domain identifier corresponding to the bit.

15. The method according to claim 14, wherein the time domain identifier corresponding to each bit comprises at least one of the following:
a time slot identifier, a subframe identifier, and an SFN identifier.

16. The method according to claim 11, wherein the interference assistance information comprises first assistance information and second assistance information, the first assistance information is used to indicate the first frequency domain resource, and the second assistance information is used to indicate the first time domain resource.

17. The method according to claim 16, wherein the first assistance information comprises a frequency combination identifier; and
the second assistance information comprises at least one of the following: transmission mode configuration information and second bitmap information.

18. The method according to claim 17, wherein the transmission mode configuration information comprises a time slot offset; and
the second bitmap information comprises a time slot identifier.

19. The method according to claim 10, wherein after the obtaining interference cancellation configuration information, the method further comprises:
stopping performing data transmission on the first time domain resource by using the first frequency domain resource.

20. User equipment UE, wherein the UE comprises a receiving unit and a control unit, wherein
the receiving unit is configured to receive interference cancellation configuration information sent by a base station, wherein the interference cancellation configuration information is used to instruct the UE to stop performing data transmission on a first time domain resource by using a first frequency domain resource, and the first time domain resource is a time domain resource that is interfered when the UE performs data transmission on the first frequency domain resource; and
the control unit is configured to stop, based on the interference cancellation configuration information received by the receiving unit, performing data transmission on the first time domain resource by using the first frequency domain resource.

21. The UE according to claim 20, wherein the interference cancellation configuration information comprises at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

22. The UE according to claim 20 or 21, wherein the first time domain resource is indicated by at least one of the following: a time slot identifier, a subframe identifier, a system frame number SFN identifier, and a first bitmap; and
the first frequency domain resource is indicated by a frequency combination identifier.

23. The UE according to claim 22, wherein the first bitmap is indicated by first bitmap information, the first bitmap information comprises a time domain identifier corresponding to each bit in the first bitmap, and a value of each bit, and a value of a bit is used to indicate whether the UE stops performing data transmission on a time domain resource indicated by a time domain identifier corresponding to the bit.

24. The UE according to claim 23, wherein the time domain identifier corresponding to each bit comprises at least one of the following:
a time slot identifier, a subframe identifier, and an SFN identifier.

25. The UE according to claim 20, wherein the UE further comprises: a sending unit, wherein
the sending unit is configured to send interference assistance information to the base station before the receiving unit receives the interference cancellation configuration information sent by the base station, wherein the interference assistance information is used to indicate the first frequency domain resource and the first time domain resource.

26. The UE according to claim 25, wherein the interference assistance information comprises first assistance information and second assistance information, the first assistance information is used to indicate the first frequency domain resource, and the second assistance information is used to indicate the first time domain resource.

27. The UE according to claim 26, wherein the first assistance information comprises a frequency combination identifier; and
the second assistance information comprises at least one of the following: transmission mode configuration information and second bitmap information.

28. The UE according to claim 27, wherein the transmission mode configuration information comprises a time slot offset; and
the second bitmap information comprises a time slot identifier.

29. A base station, wherein the base station comprises an obtaining unit and a sending unit, wherein
the obtaining unit is configured to obtain interference cancellation configuration information, wherein the interference cancellation configuration information is used to instruct user equipment UE to stop performing data transmission on a first time domain resource by using a first frequency domain resource, and the first time domain resource is a time domain resource that is interfered with when the UE performs data transmission on the first frequency domain resource; and
the sending unit is configured to send, to the UE, the interference cancellation configuration information obtained by the obtaining unit.

30. The base station according to claim 29, wherein the obtaining unit is specifically configured to: obtain the predefined interference cancellation configuration information; or receive interference assistance information sent by the UE, and determine the interference cancellation configuration information based on the interference assistance information, wherein the interference assistance information is used to indicate the first frequency domain resource and the first time domain resource.

31. The base station according to claim 29 or 30, wherein the interference cancellation configuration information comprises at least one of first configuration information and second configuration information, the first configuration information is used to instruct the UE to stop sending data on the first time domain resource by using the first frequency domain resource, and the second configuration information is used to instruct the UE to stop receiving data on the first time domain resource by using the first frequency domain resource.

32. The base station according to claim 29 or 30, wherein the first time domain resource is indicated by at least one of the following: a time slot identifier, a subframe identifier, a system frame number SFN identifier, and a first bitmap; and
the first frequency domain resource is indicated by a frequency combination identifier.

33. The base station according to claim 32, wherein the first bitmap is indicated by first bitmap information, the first bitmap information comprises a time domain identifier corresponding to each bit in the first bitmap, and a value of each bit, and a value of a bit is used to indicate whether the UE stops performing data transmission on a time domain resource indicated by a time domain identifier corresponding to the bit.

34. The base station according to claim 33, wherein the time domain identifier corresponding to each bit comprises at least one of the following:
a time slot identifier, a subframe identifier, and an SFN identifier.

35. The base station according to claim 30, wherein the interference assistance information comprises first assistance information and second assistance information, the first assistance information is used to indicate the first frequency domain resource, and the second assistance information is used to indicate the first time domain resource.

36. The base station according to claim 35, wherein the first assistance information comprises a frequency combination identifier; and
the second assistance information comprises at least one of the following: transmission mode configuration information and second bitmap information.

37. The base station according to claim 36, wherein the transmission mode configuration information comprises a time slot offset; and
the second bitmap information comprises a time slot identifier.

38. The base station according to claim 29, wherein the base station further comprises: a control unit, wherein
the control unit is configured to stop, after the obtaining unit obtains the interference cancellation configuration information, performing data transmission on the first time domain resource by using the first frequency domain resource.

39. User equipment UE, comprising: a processor, a memory, and a computer program stored in the memory and executable on the processor, wherein the computer program, when executed by the processor, implements the steps of the transmission control method according to any one of claims 1 to 9.

40. A base station, comprising: a processor, a memory, and a computer program stored in the memory and executable on the processor, wherein the computer program, when executed by the processor, implements the steps of the transmission control method according to any one of claims 10 to 19.

41. A communications system, wherein the communications system comprises the user equipment UE according to any one of claims 20 to 28 and the base station according to any one of claims 29 to 38; or
the communications system comprises the UE according to claim 39 and the base station according to claim 40.
